(19) Europäisches Patentamt / European Patent Office / Office européen des brevets

(11) **EP 3 541 641 B1**

(12) **FASCICULE DE BREVET EUROPEEN**

(45) Date de publication et mention
de la délivrance du brevet:
**06.04.2022 Bulletin 2022/14**

(21) Numéro de dépôt: **17804258.6**

(22) Date de dépôt: **17.11.2017**

(51) Classification Internationale des Brevets (IPC):
**B60C 23/06** *(2006.01)*       **G01M 7/08** *(2006.01)*
**G01M 17/02** *(2006.01)*       **B60C 11/24** *(2006.01)*

(52) Classification Coopérative des Brevets (CPC):
**B60C 23/062; B60C 11/24; B60C 23/063;
B60C 23/065; G01L 17/00; G01M 7/08;
G01M 17/025**

(86) Numéro de dépôt international:
**PCT/FR2017/053157**

(87) Numéro de publication internationale:
**WO 2018/091849 (24.05.2018 Gazette 2018/21)**

(54) **PROCEDE DE CONTROLE ET/OU DE SUIVI DE L'UTILISATION D'UN PNEUMATIQUE**

VERFAHREN ZUR ÜBERWACHUNG DER REIFENNÜTZUNG

METHOD OF CONTROLLING AND/OR TRACKING OF THE USE OF A TIRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.11.2016 FR 1661330**

(43) Date de publication de la demande:
**25.09.2019 Bulletin 2019/39**

(73) Titulaire: **Compagnie Générale des
Etablissements Michelin
63000 Clermont-Ferrand (FR)**

(72) Inventeur: **PATURLE, Antoine
63040 Clermont-Ferrand Cedex 9 (FR)**

(74) Mandataire: **Roussy, Delphine
M. F. P. MICHELIN
23, place des Carmes-Déchaux
Service juridique - Propriété Intellectuelle
DCJ/PI - F35 - Site de Ladoux
63040 Clermont-Ferrand Cedex 9 (FR)**

(56) Documents cités:
WO-A1-2010/106297       JP-A- 2002 148 133
JP-A- 2005 343 204       US-A1- 2014 025 251

## Description

La présente invention concerne le contrôle et/ou le suivi de l'utilisation d'un pneumatique.

Plus précisément, l'invention propose un procédé qui exploite la réponse acoustique d'un pneumatique sous l'effet d'une sollicitation mécanique impulsionnelle pour en déduire une information relative à au moins un paramètre d'utilisation du pneumatique tel que la pression de celui-ci ou la charge du véhicule.

Elle trouve avantageusement application pour le contrôle et/ou suivi de tout type de pneu : pneus de matériel agricole, de poids lourds, de véhicules de tourisme, de motos ou quad, etc.

On sait classiquement que lorsqu'un pneumatique est monté sur un véhicule, il est important de surveiller non seulement son usure, mais également les conditions sous lesquelles il est utilisé : pression de gonflage, charge du véhicule, etc.

L'usure d'un pneu est contrôlable facilement par une simple inspection visuelle des sculptures creusées dans la bande de roulement ou le cas échéant en s'aidant d'un outil de type jauge de profondeur.

Les paramètres d'utilisation comme la pression du pneumatique ou la charge du véhicule sont quant à eux plus difficiles à appréhender, ou nécessite en tout état de cause des équipements coûteux, notamment du fait du grand nombre de roues d'un véhicule Poids Lourd, dont le poids total autorisé en charge est supérieur à 3,5 tonnes, mais peut monter au-delà de 26 tonnes, voire 32 tonnes, ce qui requiert des essieux supplémentaires. Leur contrôle ou suivi nécessite l'utilisation d'outils complexes (manomètre, balance pour la pesée du véhicule, etc.).

Il existe donc un besoin pour une technique de contrôle et /ou de suivi des conditions d'utilisation d'un pneumatique de véhicule qui permette d'obtenir une information relative à au moins un paramètre d'utilisation du pneumatique d'une façon particulièrement simple, sans nécessiter d'outils importants et onéreux.

La demande de brevet JP2005-343204 A décrit une méthode de vérification de la pression du pneumatique dans laquelle une vibration spécifique est appliquée au pneumatique, les données du son vibratoire du pneumatique sont collectées, et un rapport d'atténuation mesuré est calculé sur la base de la valeur d'amplitude à la première fois de la fréquence de résonance de cavité et de la valeur d'amplitude seconde fois de la fréquence de résonance de cavité. La pression interne est déterminée comme normale ou non sur la base de la différence entre un rapport d'atténuation fondamental correspondant à la pression normale et le rapport d'atténuation mesuré.

La demande de brevet JP2002-148133 A décrit une méthode de vérification d'un conteneur fermé dans laquelle un test de martelage est effectué au moyen d'une tête de martelage donnant un choc électromagnétique à un boîtier pour générer un son de test de martelage. Un microphone convertit le son de test de martelage en un signal électrique. Une partie de processeur de volume sonore traite le signal pour déterminer un volume de son de test de martelage, et un micro-ordinateur détermine que le conteneur fermé présente une pression interne correspond à une exigence lorsque la fréquence du son de test de martelage est incluse dans une plage spécifique de fréquence and que le volume de son de test de martelage est inclus dans une plage spécifiée d'intensité.

La demande de brevet US2014/025251A1 décrit un système d'inspection comprenant un galet de charge appliquant une charge radiale sur une roue, et un capteur acquérant une mesure de l'énergie acoustique générée par la roue lors d'un mouvement de rotation sous charge. Un processeur programmé évalue les mesures acquises pour fournir une mesure du bruit de route du pneumatique, identifier les défauts du pneumatique, et/ou identifier des sources de bruit, vibration ou énergie acoustique.

La demande de brevet WO2010/106297A1 décrit un procédé de surveillance d'au moins un pneumatique d'au moins un véhicule automobile, le pneumatique étant muni d'un témoin d'état sonore, le procédé comprenant les étapes de détection par un capteur acoustique embarqué sur le véhicule d'un signal sonore produit par le témoin d'état au cours du roulage du pneumatique sur un sol, et d'émission, vers un serveur distant non-embarqué sur le véhicule automobile, d'informations relatives au signal sonore. En particulier, le procédé isole, parmi le bruit de roulage détecté, un bruit émis dans une plage prédéterminée de fréquences voisines d'une fréquence prédéterminée de résonance lors du roulage d'un tronçon d'un sillon circonférentiel formant témoin d'usure sonore. L'amplitude du bruit isolé est mesurée, et on compare l'amplitude mesurée avec un seuil d'alerte prédéterminé.

## PRESENTATION DE L'INVENTION

Un but de l'invention est de permettre un contrôle et /ou suivi des conditions d'utilisation d'un pneumatique de véhicule qui soit simple à mettre en œuvre et peu onéreux.

Un autre encore de l'invention est de proposer une technique de contrôle qui permette de déterminer de façon fiable une information relative à au moins un paramètre d'utilisation du pneumatique.

A cet effet, il est proposé un procédé de contrôle et/ou de suivi de l'utilisation d'un pneumatique monté sur un véhicule, comprenant les étapes suivantes :

- acquisition par un microphone disposé à l'intérieur du pneumatique d'une réponse acoustique dudit pneumatique obtenue sous l'effet d'une sollicitation mécanique impulsionnelle dudit pneumatique à l'arrêt,
- une unité de traitement automatisé de données effectue le traitement de ladite réponse acoustique dans le domaine fréquentiel,

dans le quel le traitement identifie sur la réponse dans le domaine fréquentiel deux pics de spectre situés de part et d'autre d'une fréquence de référence correspondant au premier mode de cavité du pneumatique et, en fonction de l'écart de fréquence entre les deux pics ainsi identifiés, détermine une information relative à au moins un paramètre d'utilisation du pneumatique.

Ce procédé est avantageusement complété par les caractéristiques suivantes, prises seules ou en une quelconque de leur combinaison techniquement possible :

- chacun des deux pics du spectre correspond à des maximums du spectre de leur côté respectif de la fréquence de référence ;
- l'espacement de la fréquence de chacun des pics par rapport à la fréquence de référence est inférieur à 10% de la fréquence de référence ;
- l'information relative à au moins un paramètre d'utilisation du pneumatique est un facteur de déformation correspondant au rapport entre l'écart entre les deux fréquences des pics du spectre et la fréquence de référence ;
- la fréquence de référence est définie comme le rapport de la célérité du son dans l'air avec la circonférence intérieure moyenne du pneumatique ;
- le microphone est associé à un émetteur sans fil, et la réponse acoustique est transmise par l'émetteur sans fil à l'unité de traitement automatisé de données, ladite unité de traitement automatisé de données étant disposée à l'extérieur du pneumatique ;
- le microphone est solidaire d'une jante portant le pneumatique ;
- la pression à l'intérieur du pneumatique est connue, et le procédé comprend la détermination d'une information relative à une charge du véhicule en tant que paramètre d'utilisation, en fonction de l'écart entre les fréquences des pics du spectre et de la pression;
- la charge du véhicule est connue, et le procédé comprend la détermination d'une information relative à une pression en tant que paramètre d'utilisation, en fonction de l'écart entre les fréquences des pics du spectre et de la charge du véhicule.

L'invention concerne également un produit programme d'ordinateur comprenant des instructions de code de programme pour l'exécution du procédé selon l'invention, lorsque ledit programme est exécuté sur un ordinateur. De préférence, le produit programme d'ordinateur prend la forme d'un dispositif lisible par ordinateur formant une mémoire non-volatile stockant les instructions de code de programme.

L'invention concerne également un système de contrôle et/ou de suivi de l'utilisation d'un pneumatique monté sur un véhicule, ledit système comprenant:

- un microphone disposé à l'intérieur du pneumatique et adapté pour acquérir une réponse acoustique dudit pneumatique à sollicitation mécanique impulsionnelle de celui-ci,
- une unité de traitement automatisée de données configurée pour identifier sur la réponse dans le domaine fréquentiel deux pics du spectre situés de part et d'autre d'une fréquence de référence correspondant au premier mode de cavité, et, en fonction de l'écart de fréquence entre les deux pics ainsi identifiés, déterminer une information relative à au moins un paramètre d'utilisation du pneumatique.

Le système est configuré pour mettre en œuvre le procédé selon l'un quelconque des modes de réalisation possible de l'invention. De préférence, le microphone est solidaire d'une jante portant le pneumatique. De préférence, le microphone est associé à un émetteur sans fil configuré pour transmettre à l'unité de traitement automatisé de données la réponse acoustique, ladite unité de traitement automatisé de données étant disposée à l'extérieur du pneumatique.

PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels :

- la figure 1 illustre de façon schématique un pneumatique monté sur une jante d'un véhicule,
- la figure 2 illustre de façon schématique la déformation subie par un pneumatique muni d'un microphone selon un mode de réalisation possible de l'invention,
- la figure 3 illustre schématiquement un système selon un mode de réalisation de l'invention appliqué à un véhicule agricole ;
- la figure 4 est un diagramme illustrant schématiquement plusieurs étapes d'un procédé selon un mode de réalisation possible de l'invention ;
- la figure 5 illustre un enregistrement de deux réponses acoustiques impulsionnelles de pneumatiques à même charge et à des pressions différentes ;
- la figure 6 illustre la représentation temps-fréquence des réponses acoustiques de la figure 5.

DESCRIPTION DETAILLEE

*Rappels généraux sur la structure d'un pneu*

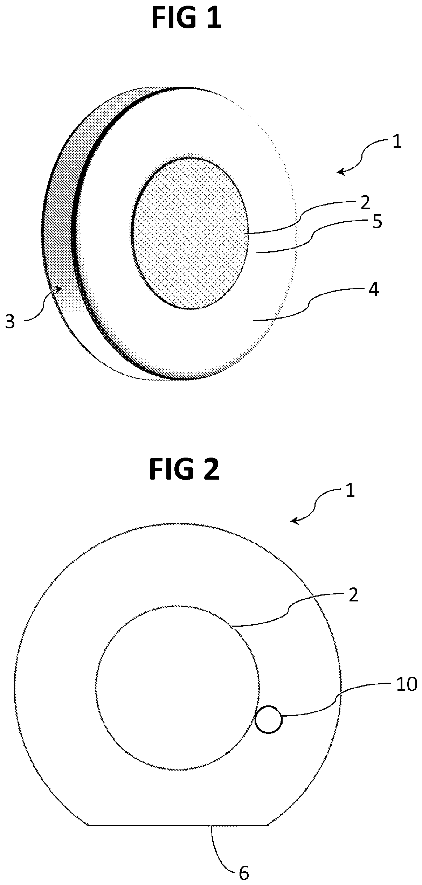

La figure 1 illustre un pneumatique 1 monté sur une jante 2. Un tel pneumatique 1 comprend d'une part une zone sommet 3 constituant une bande de roulement présentant des sculptures, et d'autre part des flancs 4 se terminant par des zones basses 5. Celles-ci comportent généralement une tringle et un talon pour permettre le montage du pneumatique 1 sur la jante 2. La jante 2 est elle-même reliée au véhicule par un essieu (non représenté). Le pneumatique permet ainsi la liaison entre le véhicule et le sol.

Un pneumatique 1 est comprend enveloppe flexible renfermant un intérieur gazeux sous pression, typiquement de l'air.

La jante 2 étant indéformable, cette force s'appliquant sur le pneumatique 1 déforme celui-ci, comme illustré sur la figure 2. La partie du sommet 3 sous la jante 2 s'aplatit, ce qui augmente la surface de contact du pneumatique avec le sol, tandis que les flancs 4 se gonflent : le pneumatique 1 se déforme. Cette déformation est d'autant plus prononcée que la pression est faible et que la charge est élevée. De même, la pression est d'autant plus forte que la charge est élevée. On comprend donc que des paramètres d'utilisation tels que la déformation du pneumatique, la pression du pneumatique ou la charge du véhicule sont liés entre eux.

*Exemple de système*

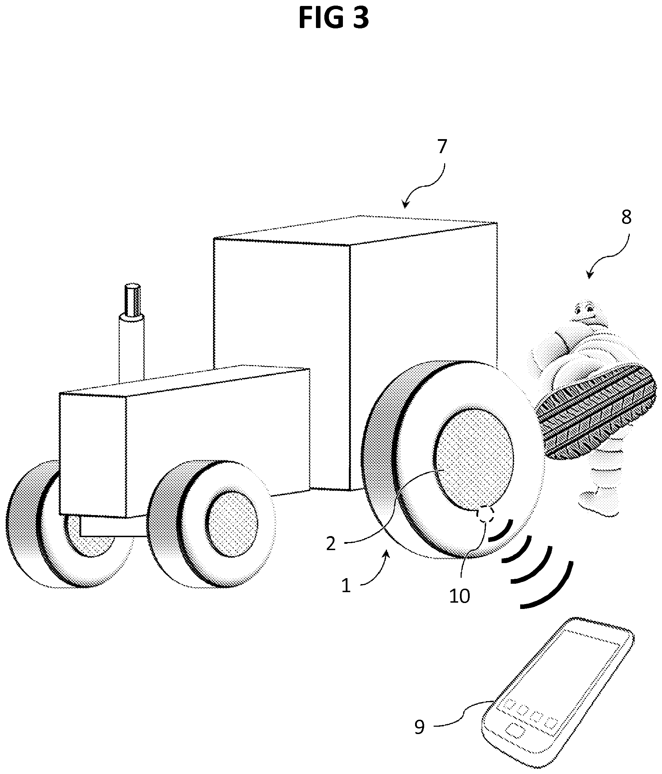

En référence à la figure 3 qui illustre schématiquement un système selon un mode de réalisation de l'invention appliqué à un véhicule agricole, un tel système comprend un microphone 10 et une unité de traitement automatisée de données 9. Ils peuvent être comme ici séparés et distincts, ou bien être disposés au sein d'un même dispositif. De préférence, le microphone 10 et l'unité de traitement automatisée de données 9 sont physiquement distincts. On peut ainsi utiliser comme microphone un dispositif d'enregistrement dédié, permettant de configurer plus finement l'acquisition, et comme unité de traitement automatisée de données 9 un terminal générique tel qu'un terminal de poche ou "smartphone". Comme illustré, l'unité de traitement automatisée de données 9 peut être un terminal de poche tel qu'un téléphone mobile intelligent, comprenant un processeur et une mémoire. Elle peut également être un ordinateur comprenant un processeur et une mémoire. En particulier, l'unité de traitement automatisée de données 9 peut être un ordinateur embarqué dans le véhicule sur lequel est monté le pneumatique.

Par ailleurs, disposer d'un microphone 10 et d'une unité de traitement automatisée de données 9 physiquement distincts permet de les disposer à des endroits différents. Comme illustré sur la figure 2, le microphone 10 est disposé à l'intérieur du pneumatique, c'est-à-dire à l'intérieur de la cavité définie par le pneumatique et qui renferme l'air sous pression. Plus précisément, le microphone 10 est ici solidaire de la jante 2. Le microphone peut par exemple être fixé à un collier entourant la gorge de la jante à l'intérieur du pneumatique 1.

De préférence, le microphone 10 est associé à un émetteur sans fil, notamment de type radiofréquence, permettant de relayer l'enregistrement de la réponse acoustique à l'unité de traitement automatisée de données 9, de préférence disposée à l'extérieur du pneumatique 1, pour son traitement. On peut ainsi par exemple prévoir une antenne à l'intérieur du pneumatique. Dans le cas d'une communication sans fil, un receveur externe peut recevoir les signaux envoyés par les moyens de communication sans fil associés au microphone 10, et les relayer à l'unité de traitement automatisée de données 9. Encore une fois, un accessoire d'un terminal de poche tel qu'un téléphone mobile intelligent peut faire office à la fois de receveur externe et d'unité de traitement automatisée de données 9, comme illustré sur l'exemple de la figure 3.

Le microphone 10 est adapté pour acquérir une réponse acoustique dudit pneumatique 1 à sollicitation mécanique impulsionnelle de celui-ci, lorsque le pneumatique est à l'arrêt. Le microphone 10, disposé à l'intérieur du pneumatique 1 est également configuré pour transmettre la réponse acoustique à l'unité de traitement automatisée de données 9, disposée à l'extérieur du pneumatique 1.

L'unité de traitement automatisée de données 9 est quant à elle configurée pour identifier sur la réponse dans le domaine fréquentiel deux pics du spectre situés de part et d'autre d'une fréquence de référence correspondant au premier mode de cavité, et, en fonction de l'écart de fréquence entre les deux pics ainsi identifiés, déterminer une information relative à au moins un paramètre d'utilisation du pneumatique 1.

*Exemple de mise en œuvre*

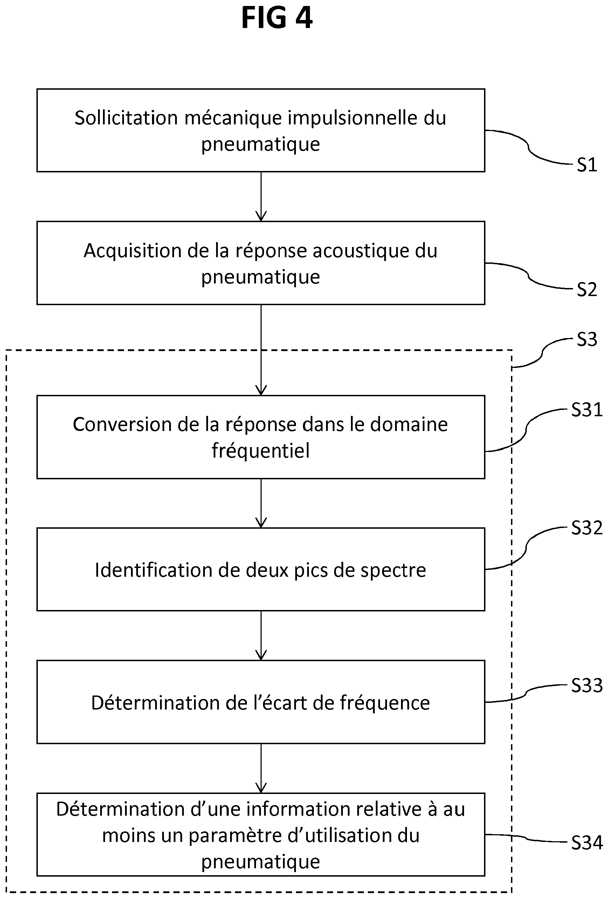

En référence à la figure 4, la première étape S1 du procédé consiste à appliquer au pneumatique 1 une sollicitation mécanique impulsionnelle. Il s'agit typiquement d'appliquer un bref coup sur le pneumatique, par exemple au moyen d'un coup de pied donné au pneumatique 1 par un opérateur 8 comme représenté, ou en frappant le pneumatique 1 avec un outil tel qu'un marteau. La simplicité de cette manœuvre fait qu'elle peut être mise en œuvre par le conducteur du véhicule 7 en tant qu'opérateur 8.

Il est possible également, afin de mieux maîtriser les caractéristiques de l'impulsion acoustique, de prévoir un dispositif mécanique commandable pour percuter le pneumatique 1 ou la jante 2 avec une force prédéterminée. Un tel dispositif peut par exemple être disposé à la surface du pneumatique 1 ou de la jante 2, et suite à l'action d'une commande, un organe mobile de ce dispositif vient percuter le pneumatique 1 ou la jante 2.

Suite à cette sollicitation mécanique impulsionnelle du pneumatique 1, des ondes sonores se propagent dans le pneumatique 1, produisant un son. Il s'agit de la réponse acoustique du pneumatique 1 à cette sollicitation mécanique impulsionnelle. La deuxième étape S2 consiste à acquisition la réponse acoustique du pneumatique au moyen du microphone 10.

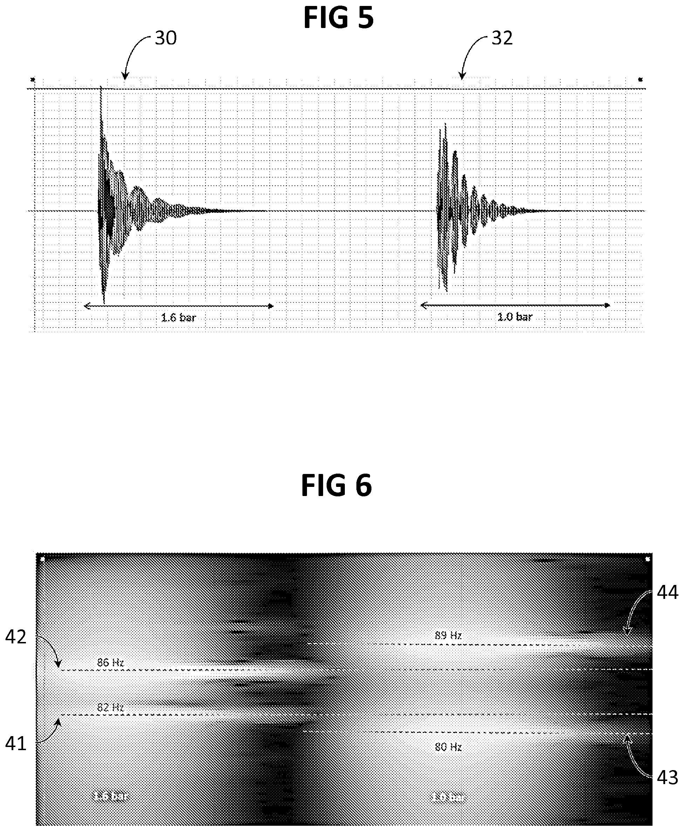

La figure 5 montre deux exemples illustratifs d'évolutions temporelles d'amplitude de réponses acoustiques à une sollicitation mécanique impulsionnelle qui ont été ainsi acquises pour un même pneumatique à charge inchangée et à des pressions différentes :

- une première réponse 30, à gauche du graphique, correspondant à un pneumatique gonflé à 1,6 bar, et
- une seconde réponse 31, à droite du graphique, correspondant au même pneumatique gonflé à 1,0 bar.

Le microphone 10 transmet la réponse à l'unité de traitement automatisée de données 9 qui reçoit ladite réponse acoustique impulsionnelle en provenance du microphone 10 et traite cette réponse dans le domaine fréquentiel (étape S3). Comme évoqué, la transmission se fait de préférence par un émetteur sans fil auquel est associé le microphone, qui permet de transmettre la réponse acoustique depuis le microphone situé à l'intérieur du pneumatique 1 jusqu'à une unité de traitement automatisée de données 9 située à l'extérieur du pneumatique 1.

La réponse est d'abord convertie dans le domaine fréquentiel (étape S31) pour obtenir le spectre en fréquence de la réponse acoustique impulsionnelle. On peut utiliser une méthode conventionnelle quelconque, adaptée au format des données représentatives de la réponse acoustique impulsionnelle, comme par exemple la transformation de Fourier, ou une méthode paramétrique de type Yule-Walker ou autre.

On obtient ainsi le spectre en fréquence de la réponse acoustique impulsionnelle. A partir de ce spectre, on identifie sur la réponse dans le domaine fréquentiel deux pics de spectre situés de part et d'autre d'une fréquence de référence correspondant au premier mode de cavité du pneumatique (étape S32).

Les inventeurs ont en effet découvert que la réponse acoustique fréquentielle d'un pneumatique déformé sous une charge présente un doublement de la fréquence fondamentale de son premier mode de cavité, qui se traduit dans le spectre par deux pics proches.

Suite à la sollicitation mécanique impulsionnelle du pneumatique 1, on excite différents modes de résonance acoustiques liés à la géométrie de la cavité intérieure formée par le pneumatique 1 et le fond de jante 2. Le premier mode de cavité correspond à la résonance principale à l'intérieur du pneumatique 1. Ce premier mode de cavité est assimilable à une onde stationnaire de résonnance d'un tube fermé sur lui-même, qui dépend uniquement de la longueur du tube lorsque le tube n'est pas écrasé.

Ce premier mode de cavité se traduit par un pic d'amplitude pour la fréquence fondamentale de ce mode. Cette fréquence fondamentale peut être approchée par une fréquence de référence $f_0$ correspondant au rapport de la célérité c du son dans l'air avec la circonférence intérieure moyenne $L_c$ du pneumatique 1, soit

$$f_0 = \frac{c}{L_c}$$

Dans les exemples de la figure 5, le pneumatique 1 a une circonférence intérieure moyenne $L_c$ d'un pneumatique estimée à 4,05 m. En prenant une célérité du son approchée à 340 m.s⁻¹, on obtient une fréquence de référence $f_0$ d'environ 84 Hz, qui correspond donc à la fréquence fondamentale du premier mode de cavité pour ce pneumatique 1.

Or, un pneumatique 1 monté sur un véhicule 7 supporte une partie du poids de celui-ci et, se déforme comme expliqué plus haut. Cette déformation a notamment pour conséquence une diminution de section du tube interne du pneumatique 1, via la striction de l'intérieur du pneumatique 1 au droit de la jante 2, i.e. au niveau du contact 6 avec le sol, et une augmentation de la longueur de ce tube. Ces changements géométriques se traduisent par un "doublement" de la fréquence fondamentale du premier mode de cavité : au lieu d'avoir un pic dans le spectre de la réponse acoustique à la fréquence fondamentale, deux pics sont observés, situés de part et d'autre de la fréquence fondamentale. Il s'avère que l'écart entre les deux pics est fonction de l'intensité de la déformation du pneumatique 1.

Les deux pics du spectre de la réponse acoustique présentent un même écart par rapport à la fréquence de référence $f_0$, prise comme approximation de la fréquence fondamentale. Les fréquences des deux pics du spectre forment donc un couple centré sur la fréquence de référence $f_0$. En outre, les deux pics du spectre de la réponse acoustique se trouvent à des fréquences très proches de la fréquence de référence $f_0$, prise comme approximation de la fréquence fondamentale. Typiquement, l'espacement de la fréquence de chacun des pics par rapport à la fréquence de référence est inférieur à 10% de la fréquence de référence. De plus, généralement, chacun des deux pics du spectre correspond à des maximums du spectre de leur côté respectif de la fréquence de référence.

Il s'ensuit que la détection des pics du spectre et l'identification des fréquences correspondantes à ces pics de détection ne présentent pas de difficultés pour sa mise en œuvre par l'unité de traitement automatisée de données 9 configurée à cet effet. De fait, les deux pics de spectre peuvent être détectés en recherchant l'amplitude maximale de chaque côté de la fréquence de référence $f_0$ sur une plage donnée (par exemple ne s'écartant pas de chaque côté plus de 10% de la fréquence de référence), et on peut vérifier cette détection en comparant les écarts respectifs entre les deux fréquences correspondant aux deux pics du spectre, qui doivent être proches.

La détection des pics de spectre est facilitée par la bonne qualité de l'acquisition de la réponse acoustique pour les fréquences autour de la fréquence fondamentale. A cet égard, la disposition du microphone 10 à l'intérieur du pneumatique 1 permet une qualité d'acquisition particulièrement adaptée pour cette application. En effet, seul un microphone 10 disposé à l'intérieur du pneumatique peut mettre en évidence le doublement de la fréquence fondamentale du premier mode de cavité, qui se traduit dans le spectre par deux pics proches. De plus, la disposition interne au pneumatique évite au microphone 10 d'acquérir des signaux perturbateurs.

La figure 6 illustre la représentation temps-fréquence des deux réponses acoustiques impulsionnelles illustrées à la figure 5. Alors que la fréquence fondamentale avait été estimée en tant que fréquence de référence à 84 Hz, on constate bien la présence d'un couple de pics autour de cette fréquence de référence :

- pour la pression à 1,6 bar, un premier pic 41 à 82 Hz et un second pic 42 à 86 Hz, soit un écart de 4 Hz, et
- pour la pression à 1,0 bar, un premier pic 43 à 80 Hz et un second pic 44 à 89 Hz, soit un écart de 9 Hz.

On constate que l'écart entre les fréquences des deux pics n'est pas le même dans les deux cas: l'écart est fonction de la déformation, et donc de la pression et de la charge. Par conséquent, le traitement de la réponse acoustique d'un pneumatique comprend une étape S33 de détermination de l'écart entre les fréquences des deux pics, puis une étape S34 de détermination d'une information relative à au moins un paramètre d'utilisation du pneumatique à partir de cet écart.

Ainsi, pour deux fréquences de pics $f_1$ et $f_2$, on a

$$f_1 - f_2 = \Delta f \approx f_0 \frac{V_{cp}}{V}$$

Avec $\Delta f$ l'écart entre les deux fréquences des pics, $V_{cp}$ le volume du tube interne du pneumatique 1 déformé, et V le volume total du pneu non écrasé. On peut donc définir un facteur de déformation correspondant au rapport entre l'écart $\Delta f$ entre les deux fréquences correspondant au premier mode de cavité et la fréquence de référence $f_0$:

$$d_f = \frac{V_{cp}}{V} = \frac{\Delta f}{f_0}$$

En reprenant les exemples numériques évoqués précédemment, on a par exemple:

- pour 1,6 bar:

$$\left(\frac{V_{cp}}{V}\right)_{1.6\,bar} \approx \frac{4}{84} \approx 5\ \%$$

- pour 1,0 bar:

$$\left(\frac{V_{cp}}{V}\right)_{1.0\,bar} \approx \frac{9}{84} \approx 11\ \%$$

Comme indiqué plus haut, la déformation, la pression et la charge à l'essieu sont liées. Par conséquent, outre le facteur de déformation, plusieurs informations sur différents paramètres d'utilisation peuvent être déterminées. Par exemple, lorsque la pression à l'intérieur du pneumatique 1 est connue, on peut déterminer une information relative à une charge du véhicule 7 en tant que paramètre d'utilisation, en fonction de l'écart entre les fréquences des pics du spectre et de la pression. Lorsque la charge du véhicule 7 est connue, on peut déterminer une information relative à une pression en tant que paramètre d'utilisation, en fonction de l'écart entre les fréquences des pics du spectre et de la charge du véhicule.

Par ailleurs, le facteur de déformation est en lui-même indicatif de la déformation, et peut donc constituer directement une information sur la déformation en tant que paramètre d'utilisation. On peut également en déduire d'autres paramètres liés à la déformation, comme par exemple la flèche du pneumatique 1.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de contrôle et/ou de suivi de l'utilisation d'un pneumatique (1) monté sur un véhicule (7), comprenant les étapes suivantes:

   - acquisition par un microphone disposé à l'intérieur du pneumatique d'une réponse acoustique dudit pneumatique (1) obtenue sous l'effet d'une sollicitation mécanique impulsionnelle dudit pneumatique à l'arrêt,
   - une unité de traitement automatisé de données effectue le traitement de ladite réponse acoustique dans le domaine fréquentiel,

   **caractérisé en ce que** ledit traitement identifie sur la réponse dans le domaine fréquentiel deux pics de spectre situés de part et d'autre d'une fréquence de référence correspondant au premier mode de cavité du pneumatique et, en fonction de l'écart de fréquence entre les deux pics ainsi identifiés, détermine une information relative à au moins un paramètre d'utilisation du pneumatique.

2. Procédé selon la revendication précédente, dans lequel chacun des deux pics du spectre correspond à des maximums du spectre de leur côté respectif de la fréquence de référence.

3. Procédé selon l'une quelconque des revendications précédentes, dans lequel l'espacement de la fréquence de chacun des pics par rapport à la fréquence de référence est inférieur à 10% de la fréquence de référence.

4. Procédé selon l'une quelconque des revendications précédentes, dans lequel l'information relative à au moins un paramètre d'utilisation du pneumatique est un facteur de déformation correspondant au rapport entre l'écart entre les deux fréquences des pics du spectre et la fréquence de référence.

5. Procédé selon l'une quelconque des revendications précédentes, dans lequel la fréquence de référence est définie comme le rapport de la célérité du son dans l'air avec la circonférence intérieure moyenne du pneumatique (1).

6. Procédé selon l'une quelconque des revendications précédentes, dans lequel le microphone est associé à un émetteur sans fil, et la réponse acoustique est transmise par l'émetteur sans fil à l'unité de traitement automatisé de données, ladite unité de traitement automatisé de données étant disposée à l'extérieur du pneumatique.

7. Procédé selon l'une quelconque des revendications précédentes, dans lequel le microphone est solidaire d'une jante (2) portant le pneumatique (1).

8. Procédé selon l'une quelconque des revendications précédentes, dans lequel la pression à l'intérieur du pneumatique (1) est connue, et le procédé comprend la détermination d'une information relative à une charge du véhicule en tant que paramètre d'utilisation, en fonction de l'écart entre les fréquences des pics du spectre et de la pression.

9. Procédé selon l'une quelconque des revendications précédentes, dans lequel la charge du véhicule (7) est connue, et le procédé comprend la détermination d'une information relative à une pression en tant que paramètre d'utilisation, en fonction de l'écart entre les fréquences des pics du spectre et de la charge du véhicule.

10. Produit programme d'ordinateur comprenant des instructions de code de programme pour l'exécution du procédé selon l'une quelconque des revendications précédentes, lorsque ledit programme est exécuté sur un ordinateur.

11. Système de contrôle et/ou de suivi de l'utilisation d'un pneumatique (1) monté sur un véhicule (7), ledit système comprenant:

- un microphone (10) disposé à l'intérieur du pneumatique (1) et adapté pour acquérir une réponse acoustique dudit pneumatique à sollicitation mécanique impulsionnelle de celui-ci, **caractérisé en ce que** ledit système comprend également :
- une unité de traitement automatisé de données (9) configurée pour identifier sur la réponse dans le domaine fréquentiel deux pics du spectre situés de part et d'autre d'une fréquence de référence correspondant au premier mode de cavité, et, en fonction de l'écart de fréquence entre les deux pics ainsi identifiés, déterminer une information relative à au moins un paramètre d'utilisation du pneumatique (1).

12. Système selon la revendication précédente, dans lequel le microphone est associé à un émetteur sans fil configuré pour transmettre à l'unité de traitement automatisé de données la réponse acoustique, ladite unité de traitement automatisé de données étant disposée à l'extérieur du pneumatique..

13. Système selon l'une quelconque des revendications 11 ou 12, dans lequel le microphone (10) est solidaire d'une jante (2) portant le pneumatique (1).

**Patentansprüche**

1. Verfahren zur Kontrolle und/oder Verfolgung der Benutzung eines auf ein Fahrzeug (7) montierten Luftreifens (1), das die folgenden Schritte enthält:

- Erfassung durch ein im Inneren des Luftreifens angeordnetes Mikrofon einer akustischen Antwort des Luftreifens (1), die unter der Wirkung einer mechanischen Impulsbeanspruchung des Luftreifens bei Stillstand erhalten wird,
- eine automatisierte Datenverarbeitungseinheit führt die Verarbeitung der akustischen Antwort im Frequenzbereich durch,

**dadurch gekennzeichnet, dass** die Verarbeitung in der Antwort im Frequenzbereich zwei Spektrumspeaks identifiziert, die sich zu beiden Seiten einer Bezugsfrequenz befinden, die dem ersten Schwingungstyp des Luftreifens entspricht, und abhängig vom Frequenzhub zwischen den zwei so identifizierten Peaks eine Information bezüglich mindestens eines Benutzungsparameters des Luftreifens bestimmt.

2. Verfahren nach dem vorhergehenden Anspruch, wobei jeder der zwei Peaks des Spektrums einem Maximum des Spektrums auf ihrer jeweiligen Seite der Bezugsfrequenz entspricht.

3. Verfahren nach einem der vorhergehenden Ansprüche, wobei der Abstand der Frequenz jedes der Peaks bezüglich der Bezugsfrequenz geringer als 10% der Bezugsfrequenz ist.

4. Verfahren nach einem der vorhergehenden Ansprüche, wobei die Information bezüglich mindestens eines Benutzungsparameters des Luftreifens ein Verformungsfaktor ist, der dem Verhältnis zwischen dem Hub zwischen den zwei Frequenzen der Peaks des Spektrums und der Bezugsfrequenz entspricht.

5. Verfahren nach einem der vorhergehenden Ansprüche, wobei die Bezugsfrequenz als das Verhältnis zwischen der Schallgeschwindigkeit in der Luft und dem mittleren inneren Umfang des Luftreifens (1) definiert wird.

6. Verfahren nach einem der vorhergehenden Ansprüche, wobei das Mikrofon einem drahtlosen Emitter zugeordnet ist, und die akustische Antwort vom drahtlosen Emitter an die automatisierte Datenverarbeitungseinheit übertragen wird, wobei die automatisierte Datenverarbeitungseinheit außerhalb des Luftreifens angeordnet ist.

7. Verfahren nach einem der vorhergehenden Ansprüche, wobei das Mikrofon fest mit einer den Luftreifen (1) tragenden Felge (2) verbunden ist.

8. Verfahren nach einem der vorhergehenden Ansprüche, wobei der Druck innerhalb des Luftreifens (1) bekannt ist, und das Verfahren die Bestimmung einer Information bezüglich einer Last des Fahrzeugs als Benutzungsparameter abhängig vom Hub zwischen den Frequenzen der Peaks des Spektrums und dem Druck enthält.

9. Verfahren nach einem der vorhergehenden Ansprüche, wobei die Last des Fahrzeugs (7) bekannt ist, und das Verfahren die Bestimmung einer Information bezüglich eines Drucks als Benutzungsparameter abhängig vom Hub zwischen den Frequenzen der Peaks des Spektrums und der Last des Fahrzeugs enthält.

10. Computerprogrammprodukt, das Programmcodeanweisungen zur Ausführung des Verfahrens nach einem der vorhergehenden Ansprüche enthält, wenn das Programm auf einem Computer ausgeführt wird.

11. System zur Kontrolle und/oder Verfolgung der Benutzung eines auf ein Fahrzeug (7) montierten Luftreifens (1), wobei das System enthält:

- ein Mikrofon (10), das im Inneren des Luftreifens (1) angeordnet und geeignet ist, eine akustische Antwort des Luftreifens bei dessen mechanischer Impulsbelastung zu erfassen,

**dadurch gekennzeichnet, dass** das System ebenfalls enthält:

- eine automatisierte Datenverarbeitungseinheit (9), die konfiguriert ist, in der Antwort im Frequenzbereich zwei Peaks des Spektrums zu identifizieren, die sich zu beiden Seiten einer Bezugsfrequenz befinden, die dem ersten Schwingungsmodus entspricht, und abhängig vom Frequenzhub zwischen den zwei so identifizierten Peaks eine Information bezüglich mindestens eines Benutzungsparameters des Luftreifens (1) zu bestimmen.

12. System nach dem vorhergehenden Anspruch, wobei das Mikrofon einem drahtlosen Emitter zugeordnet ist, der konfiguriert ist, die akustische Antwort an die automatisierte Datenverarbeitungseinheit zu übertragen, wobei die automatisierte Datenverarbeitungseinheit außerhalb des Luftreifens angeordnet ist.

13. System nach einem der Ansprüche 11 oder 12, wobei das Mikrofon (10) fest mit einer den Luftreifen (1) tragenden Felge (2) verbunden ist.

**Claims**

1. Method for checking and/or monitoring the use of a tyre (1) mounted on a vehicle (7), comprising the following steps:

- acquisition, by a microphone arranged inside the tyre, of an acoustic response of said tyre (1) obtained under the effect of a pulsed mechanical stress on said tyre when stopped,
- processing of said acoustic response in the frequency domain by a computerized data processing unit,

**characterized in that** said processing identifies, in the response in the frequency domain, two spectral spikes situated on either side of a reference frequency corresponding to the first cavity mode of the tyre and, as a function of the frequency deviation between the two duly identified spikes, determines information concerning at least one parameter of use of the tyre.

2. Method according to the preceding claim, wherein each of the two spikes of the spectrum corresponds to maxima of the spectrum on their respective side of the reference frequency.

3. Method according to either one of the preceding claims, wherein the spacing of the frequency of each of the spikes relative to the reference frequency is less than 10% of the reference frequency.

4. Method according to any one of the preceding claims, wherein the information relating to at least one parameter of use of the tyre is a deformation factor corresponding to the ratio between the deviation between the two frequencies of the spikes of the spectrum and the reference frequency.

5. Method according to any one of the preceding claims, wherein the reference frequency is defined as the ratio of the speed of sound in air to the average internal circumference of the tyre (1).

6. Method according to any one of the preceding claims, wherein the microphone is linked to a wireless transmitter, and the acoustic response is transmitted by the wireless transmitter to the computerized data processing unit, said computerized data processing unit being arranged outside of the tyre.

7. Method according to any one of the preceding claims, wherein the microphone is secured to a rim (2) bearing the tyre (1).

8. Method according to any one of the preceding claims, wherein the pressure inside the tyre (1) is known, and the method comprises the determination of information relating to a load of the vehicle as parameter of use, as a function of the deviation between the frequencies of the spikes of the spectrum and of the pressure.

9. Method according to any one of the preceding claims, wherein the load of the vehicle (7) is known, and the method comprises the determination of information relating to a pressure as parameter of use, as a function of the deviation between the frequencies of the spikes of the spectrum and of the load of the vehicle.

10. Computer program product comprising program code instructions for executing the method according to any one of the preceding claims, when said program is run on a computer.

11. System for checking and/or monitoring the use of a tyre (1) mounted on a vehicle (7), said system comprising:

- a microphone (10) arranged inside the tyre (1) and suitable for acquiring an acoustic response of said tyre to pulsed mechanical stress thereon,

**characterized in that** said system also comprises:

- a computerized data processing unit (9) configured to identify, on the response in the frequency domain, two spikes of the spectrum situated on either side of a reference frequency corresponding to the first cavity mode, and, as a function of the frequency deviation between two duly identified spikes, determine information relating to at least one parameter of use of the tyre (1).

12. System according to the preceding claim, wherein the microphone is linked to a wireless transmitter configured to transmit the acoustic response to the computerized data processing unit, said computerized data processing unit being arranged outside of the tyre.

13. System according to either one of Claims 11 and 12, wherein the microphone (10) is secured to a rim (2) bearing the tyre (1).

# FIG 1

# FIG 2

# FIG 3

# FIG 4

Sollicitation mécanique impulsionnelle du pneumatique — S1

Acquisition de la réponse acoustique du pneumatique — S2

S3

Conversion de la réponse dans le domaine fréquentiel — S31

Identification de deux pics de spectre — S32

Détermination de l'écart de fréquence — S33

Détermination d'une information relative à au moins un paramètre d'utilisation du pneumatique — S34

## FIG 5

## FIG 6

**EP 3 541 641 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 2005343204 A
- JP 2002148133 A
- US 2014025251 A1
- WO 2010106297 A1